# EUROPEAN PATENT SPECIFICATION

(11) **EP 1 964 622 B1**
(45) Date of publication and mention of the grant of the patent: **23.01.2013**
(21) Application number: 06811514.6
(22) Date of filing: 10.10.2006
(51) Int. Cl.: B21D 22/02, B21D 37/00, B23K 26/00, B41M 5/26, B22D 23/00, B29C 33/38, B44C 1/22

(54) **METHOD OF FORMING AN IMAGE PATTERN ON SURFACE OF A METALLIC GLASS MEMBER**
VERFAHREN ZUR ERZEUGUNG EINES BILDMUSTERS AUF EINER OBERFLÄCHE EINES METALLISCHEN GLASGLIEDS
PROCEDE DE FORMATION D'UN MOTIF D'IMAGE SUR LA SURFACE D'UN ELEMENT EN VERRE METALLIQUE

(30) Priority: 13.12.2005 JP 2005359305
(43) Date of publication of application: 03.09.2008
(73) Proprietor: NGK Insulators, Ltd., Nagoya-shi, Aichi 467-8530 (JP)
(72) Inventor: INOUE, Akihisa, Miyagi 980-8577 (JP); WANG, Xin Min, Sendai-shi, Miyagi 980-8579 (JP); MURAMATSU, Naokuni, Aichi 467-8530 (JP); KONDO, Yoshimasa, Aichi 467-8530 (JP); KATO, Kenji, Aichi 467-8530 (JP)
(74) Representative: Horn Kleimann Waitzhofer
(86) International application number: PCT/JP2006/320201
(87) International publication number: WO 2007/069385

(56) References cited:
- WO-A-2005/030430
- DE-A1- 4 441 337
- JP-A- 02 030 306
- JP-A- 11 197 862
- JP-A- 2002 283 073
- JP-A- 2004 115 901
- JP-A- 2005 093 391
- JP-A- 2005 138 169
- JP-A- 2005 152 968
- JP-A- 2005 186 080
- US-A- 5 950 704
- DATABASE WPI Week 199722 Thomson Scientific, London, GB; AN 1997-236731 XP002542971 -& CN 1 099 485 A (SHI T) 1 March 1995 (1995-03-01)

## Description

The present invention relates to a method of forming image pattern onto a surface of a metallic glass according to the preamble of claim 1 (see, for example US 5 950 704), used for forming a design onto a surface of metallic glass or for adding a decorative pattern, an image, or a letter to the surface of the metallic glass (e.g. a mechanical component),.

### Description of the Related Art

In order to form a surface design of a resin-made mechanical product, a photographic image has been directly inscribed by laser marking on a product (e.g. Patent Document 1: Japanese Patent Laid-Open Application No. 2005-152968, "Image marking device for cellular phone" Techno Polymer Co., Ltd.). Image drawing onto a metal surface by laser processing as above is introduced in Patent Document 2 (Japanese Patent Laid-Open Application No. 2004-115901, "Method for forming picture onto aluminum alloy surface "AISIN KEIKINZOKU, Co., Ltd.). Further, a method of inscribing a pattern, which is to be transferred onto a surface of a resin molded product, onto an inner surface of a mold cavity for resin molding by laser processing has been disclosed (e.g. Patent Document 3: Japanese Patent Laid-Open Application No. 2004-291288, "Mold cavity for molding resin and its manufacturing method" SUNARROW LIMITED). Moreover, as a method of inscribing a fine pattern onto a surface of metallic glass, a method has been introduced in Non-patent Document 4 ("Functional Materials" July 2002 issue, Vo1.22, No.7, PR16 to PR17; CMC Publishing Co., Ltd.) in which a master of a pattern formed using electron-beam lithography and SiO₂ etching is reversed to a mold by Ni electro forming and the pattern is replicated onto a Pd based metallic glass.

### Brief Summary of the Invention

There have been problems with the conventional image pattern forming methods as below.
(a) First, in the method of laser marking directly onto the product shown in Patent Documents 1 and 2, to inscribe a fine pattern onto a large number of products with positional accuracy, a large amount of machining time and a large number of devices to execute the operation are required, and consequently, operating efficiency becomes worse.
(b) Next, with using the method described in Patent Document 3, a large number of resin products having fine patterns can be formed by the laser marking onto the mold cavity for resin molding, and then efficiently reverse transferring the patterns to the resin product. But this method could not be used for forming a metallic glass and a metal.
(c) Further, with using the method described in Non-Patent Document 4, a pattern can be transferred to a metallic glass. But a large number of mold producing steps requires taking a long period of time, it makes the cost of the mold high accordingly. Because lithography and Ni electro forming are used for the method. Further, the mold for Ni electro forming can be used for a Pd based metallic glass, which has a low supercooled liquid temperature range and is press-formed at not higher than 400°C. But the mold cannot be used for Zr based, Ti based, Cu based, Ni based and Fe based metallic glass, which supercooled liquid temperature ranges are not lower than 400°C (which are press-formed at not lower than 400°C), and consequently, the strength of the mold is insufficient.

In order to solve the foregoing problems, the present inventors conducted trials of a variety of methods, conditions and dedicated devices in which the number of operating steps required for pattern formation is small and the pattern forming operation itself is efficient, and which are also applicable to press-forming at not lower than 400°C, and proceeded their tests and studies. As a result, the present inventors have found that, a reversely replicated pattern can be repeatedly formed in a simple and efficient manner especially onto the surfaces of Zr based, Ti based, Cu based, Ni based and Fe based metallic glass with the surface of a heat-resistant metal-made mold which is irradiated with high energy density light to form a pattern.

It has been further found at that time that a clear image pattern can be expressed by dividing a worked area on the mold surface into rectangular domains each having one side length of not smaller than 10 µm and not larger than 500 µm, dividing the inside of each of the rectangular domains into M by N units (3≤M,N≤10; M and N are integers) of regions to determine a resolution, and providing, or not providing, dot holes in each of the M by N units of divided regions (and further controlling the depth of the dot worked holes) to form a shaded dots assembled pattern onto the mold.

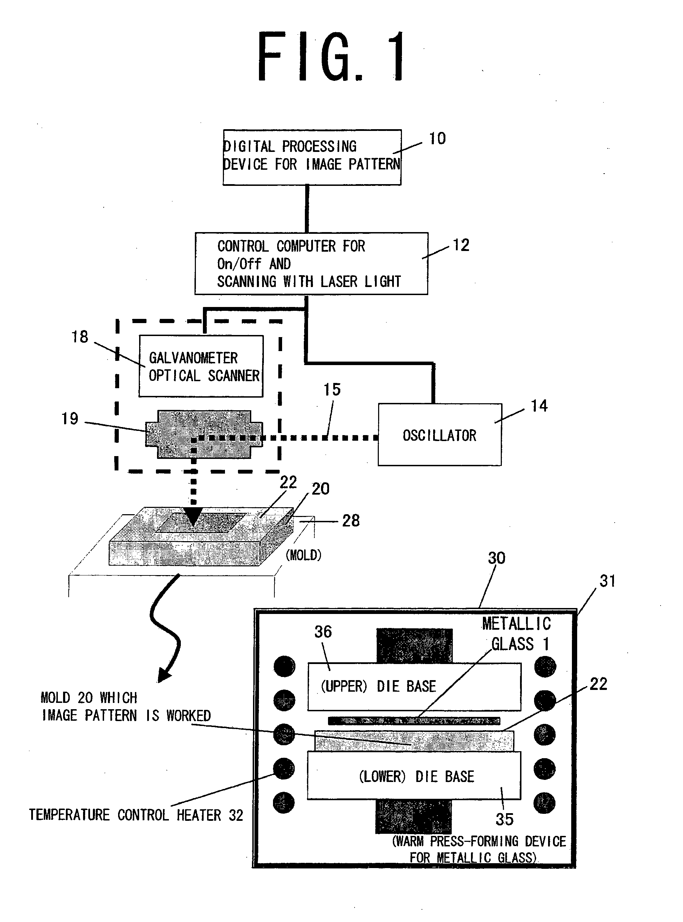

With such the method, the image pattern becomes clearer, thereby enabling further reduction in time for generating an NC program which controls an irradiation pattern of the high energy density light and for the irradiation process. On the basis of such findings, the present inventors further conducted extensive studies, to reach completion of the present invention based upon a device with a basic configuration shown in FIG. 1.

In accordance with a first aspect of the present invention, a method of forming an image pattern onto a surface of the metallic glass member is defined in claim 1.

A processed area of the surface of the mold may be divided into rectangular domains each having one side length of not smaller than 10 µm and not larger than 500 µm; the dots assembled pattern may have shades; the shades may be formed by forming the dot holes or not within each of the rectangular domains.

The surface of the mold may be divided into rectangular domains each having one side length of not smaller than 10 µm and not larger than 500 µm; each of the rectangular domains may be divided into M by N units (3≤M,N≤10; M and N are integers) of regions for setting a resolution; the dots assembled pattern may have shades; the shades may be formed by forming the dot holes or not within each of the regions.

Power of the high energy density light 15 may be controlled so as to make a depth of the dot hole not smaller than 0.1 µm and not larger than 10 µm.

The mold may be made of a cemented carbide alloy.

The high energy density light may be laser light.

In accordance with an aspect not covered by the appended claims, a device for forming an image pattern onto a surface of a metallic glass with a mold, comprises:(a) a digital processing device for preparing a bitmap data being mirror reversed with respect to a real image; (b) a software for dividing a worked area of the surface of the mold into rectangular domains each having one side length of not smaller than 10 µm and not larger than 500 µm, dividing each of the rectangular domains into M by N units (3≤M,N≤10; M and N are integers) of regions, and making on/of signals for forming dot holes or not respectively within each of the regions;
(c) a control computer for scanning while repeatedly flashing output of high energy density light;
(d) an oscillator for generating high energy density light by means of a control signal, a mirror in a galvanometer optical scanner for scanning with the high energy density light, a sample stage for holding the mold; and
(e) a warm press-forming device for transferring a mirror reversed image pattern on the surface of the mold onto the metallic glass within a supercooled liquid temperature range (Tg-Tx).

In accordance with a further aspect not covered by the appended claims, a metallic glass, comprises a surface formed an image pattern with shades by assembly of dot holes in accordance with a bitmap data.

The shades may be formed by any one of the methods of the present invention.

The method of the present invention has made it possible to form a pattern efficiently with positional accuracy onto metallic glass, especially even onto Zr based, Ti based, Cu based, Ni based and Fe based metallic glass , which have supercooled liquid temperature ranges of not lower than 400°C and are also required to be press-formed at not lower than 400°C, in large number with the simple operating steps required for pattern formation.

### Brief Description of the Drawings

Figure 1 is a view showing a basic configuration of a device;
Figure 2 is a process chart showing a typical image pattern forming method of the present invention;
Figure 3 is a front view of a mold on which a reversed image of a digital photograph in dot pattern is drawn;
Figure 4 is a front view of a mold on which a letter "N" is drawn; and
Figure 5 is a front view of the metallic glass on which an image pattern made with a digital camera and laser processed onto a mold are transferred.

### Detailed Description of the Invention

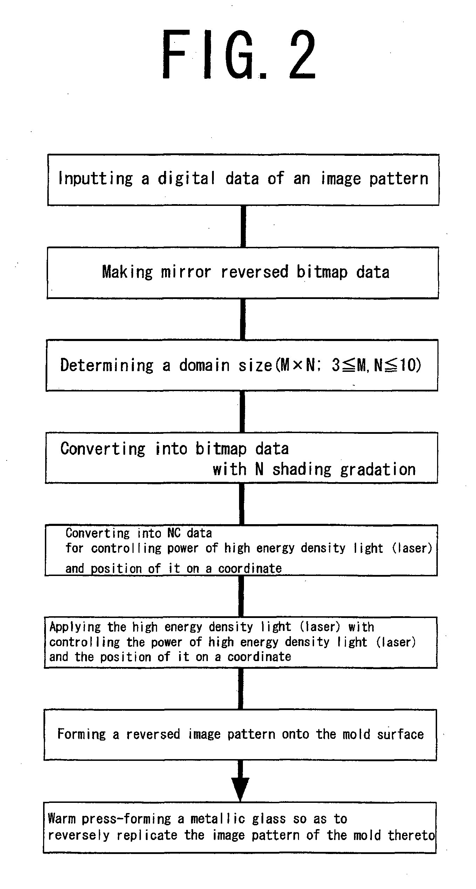

A preferred embodiment of the present invention is described below. Figure 1 is a basic device configuration. Figure 2 is a process chart showing a flow of a basic process of the present invention, where the following procedure has been adopted: "inputting a digital data of an image pattern" → "making mirror reversed bitmap data" → "determining a domain size" → "converting into bitmap data with N shading gradation" → "converting into NC data for controlling power of high energy density light (laser) and position of it on a coordinate" → "applying the high energy density light (laser) with controlling the power of high energy density light (laser) and the position of it on a coordinate" → "forming a reversed image pattern onto the mold surface" → "warm press-forming a metallic glass so as to reversely replicate the image pattern of the mold thereto". Further, as described later, "determining a domain size" → "converting into bitmap data with N shading gradation" may be deleted, and the process shifts from "producing mirror reversed bitmap data" to "converting into NC data for controlling power of high energy density light (laser) and position of it on a coordinate".

In the present invention, first, an image pattern is converted into bitmap data being mirror reversed with respect to a real image. The real image is a digital photograph captured by a digital camera or an analog image (analog photograph, painting, or other analog images). "Input of data" means reading a digital data of the digital photograph and digitizing the analog image by a digital device (not shown), and converting the digitized data into a bitmap by a digital processing device 10 such as a personal computer. Then, the image pattern is converted into the bitmap data by mirror reversing with respect to the real image.

Next, high energy density light 15 is repeatedly flashed. The mold surface 22 is scanned while one dot holes 24 is formed with each irradiation of the high energy density light 15, to form an image pattern as a dots assembled pattern 21 onto the mold surface 22 in accordance with the bitmap data. The high energy density light 15 may for example be YAG laser light, YVO₄ laser light that is to be most easily handled, infrared laser, ultraviolet laser, or the like. Further, the high energy density light 15 may be laser light having a conversion wavelength from its higher harmonic wave. Moreover, an electron beam may be used.

Furthermore, as for the mold 20, a cemented carbide alloy (WC-Co alloy), which is heat resistant and has high hardness is preferably selected in a case where the mold 20 is used for image transfer to a metallic glass at a temperature not lower than 400°C. Another hard metal material such as a hot work tool steel may also be selected. Further, the mold 20 may be previously formed into three-dimensional shape in line with the shape of the metallic glass 1 as a member to which an image is reversely replicated. The worked surface 22 of the mold 20 preferably has a smooth flat shape so as to be in a mirror surface state, but another pattern may be previously inscribed to the worked surface 22 by machining, etching processing (embossed pattern working), or the like.

The image pattern formed surface 22 of the mold 20 is worked by forming dots assembled pattern 21 onto the mold surface 22 in accordance with the bitmap data. In the present invention, it is preferable to work on each of domains of divided rectangles (squares are adopted in the present example) each having sides length of not smaller than 10 µm and not larger than 500 µm. Each domains is divided into M by N units (3≤M,N≤10; M and N are integers) of regions, and then subjected to processing of dot holes (including no dot hole). The reason that the worked area on the mold 20 is divided into the rectangular domains is to regulate a working speed. If the sides are smaller than 10 µm, the division is too fine to be realistic in terms of time for data processing and the working. On the other hand, if the sides are larger than 500 µm, the time for the processing and working are short, but the image pattern loses its clearness, and consequently, its appearance becomes significantly poor with respect to the real image. (The length of sides are uniformed each other in length and width in this case, but the length of the sides can be made different each other in the length and width.)

The reason that each rectangular domain is divided into M by N units of regions, and each of M and N is not smaller than 3 and not larger than 10 is as follows. If each of M and N is smaller than 3, the amount of information for expressing the shape outline is reduced, causing significant deterioration in image quality at the time of conversion of a fine picture pattern such as a photograph into the bitmap data. On the other hand, if each of M and N is larger than 10, the resolution increases. But classification operation processing on data to have shading gradation takes too long time. (The length and width of region may be the same each other [or may be different (= rectangular domain)], and the number of division of the region may be the same N [or may be different as described above], to give a square domain. In addition, the dot holes may be made in accordance with the bitmap data without the division of the rectangular domains.

The shades of the image pattern are expressed by density of dots formed onto the surface. Furthermore, the depth of the dot holes 24 may be changed in the range of not smaller than 0.1 µm and not larger than 10 µm. The reason is that as follows. If the depth of the dot holes 24 is smaller than 0.1 µm, unclear shade makes the image pattern blurred. On the other hand, if the depth of the dot holes 24 is larger than 10 µm, the shading is clear, but the dot holes 24 make the metallic glass surface rough that appears and is sensed by touching with a hand, which is unfavorable.

This dot hole processing is executed with the high energy density light 15 such as laser light applied from the oscillator 14 by means of a control signal from the control computer 12. And the bitmap data with N shading gradation is converted into NC data for controlling the power of the high energy density light (laser) and the position of it on a coordinate. The high energy density light 15, which is reflected on the mirror 19 in the galvanometer optical scanner 18, scans the image pattern formed surface 22 of the mold 20. And the high energy density light 15, which is controlled by software loaded on the control computer 12 makes the dot holes in line with an on/off signal based upon the NC data. The depth of the dot holes is controlled based upon the power of the high energy density light 15 as described above. When the depth of the dot holes are controlled, the power of the high energy density light 15 is controlled such that the depth of the dot holes 24 are not smaller than 0.1 µm and not larger than 10 µm as described above. The depth of the dot holes may be uniformed each other.

The mirror 19 in the galvanometer optical scanner 18 makes the high energy density light 15 scans the image pattern formed surface 22 with changing reflection angles of the high energy density light 15.

The software loaded on the control computer 12 includes the image pattern information such as division information for dividing the image pattern formed surface into the rectangular domains, and conversion information for processing bitmap data, which is to be allocated to each of the domains, into M by N units (3≤M,N≤10; M and N are integers) of shading gradation, and thereafter converting the gradation into on/off signals representing presence or absence of the dot holes 24 on the image pattern formation surface (as well as "power" information of the high energy density light 15 in the case of controlling its power).

The sample stage 28, which serves to hold the mold, is installed to receive the high energy density light 15 such as laser light applied from the oscillator 14.

As shown in Figure 1, a warm press-forming device 30 comprises a chamber 31 having a temperature control heater 32, and a pair of die bases 35 (lower) and 36 (upper). And inside of the chamber 31 is filled and aerated with high vacuum or inert gases (helium, nitrogen, argon gas, etc.) so that the warm press-forming can be performed within a non-oxidizing atmosphere. The metallic glass 1 which is set within the chamber 31 can be accessed through an open/close section (not shown). The warm press-forming is performed under the oxidizing atmosphere such as air. In this case, the warm press-forming should be rapidly performed so as, according to the present invention, to be completed before crystallization, whereby an oxide film of the surface of the metallic glass 1 can serve as a protection film so as to prevent oxidization inside. And so long as such a condition is satisfied, the warm press-forming can also be performed in the air.) The die base 35 is for being loaded with the mold. The die base 36 is for pressing the metallic glass 1 onto the mold 20. In the case of the present example, the die base 36 presses the metallic glass 1 onto the mold 20. The metallic glass 1 is held at the temperature within the supercooled liquid temperature range Tg-Tx by the temperature control heater 32 inside the chamber 31 of the warm press-forming device 30.

With the warm press-forming device 30, it is possible to form the superfine reverse replica onto the metallic glass 1 with the mold 20 within the supercooled liquid temperature range [Tg (metallic glass transition start temperature) to Tx (metallic glass transition end temperature); within this range, a viscous flowing property like a glass is obtained and a pattern as superfine as a nano size can be formed (or replicated)].

As for the metallic glass, Zr based, Ti based, Ni based, Cu based or Fe based metallic glass is preferred. Because those types of metallic glass which have relatively broad supercooled liquid temperature ranges contain no high-priced metal element as the main constituent element, the low cost of metallic glass makes this method an economical process.

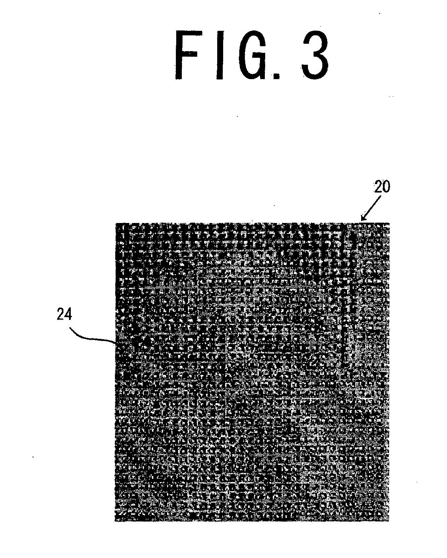

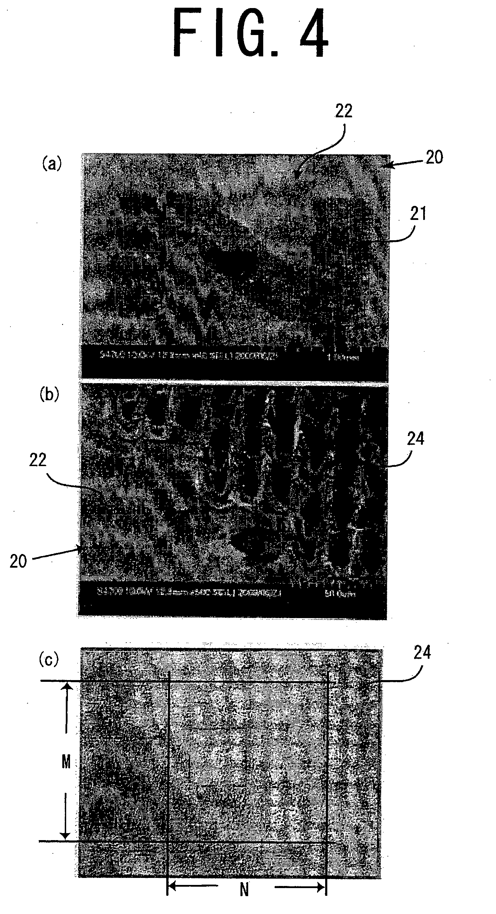

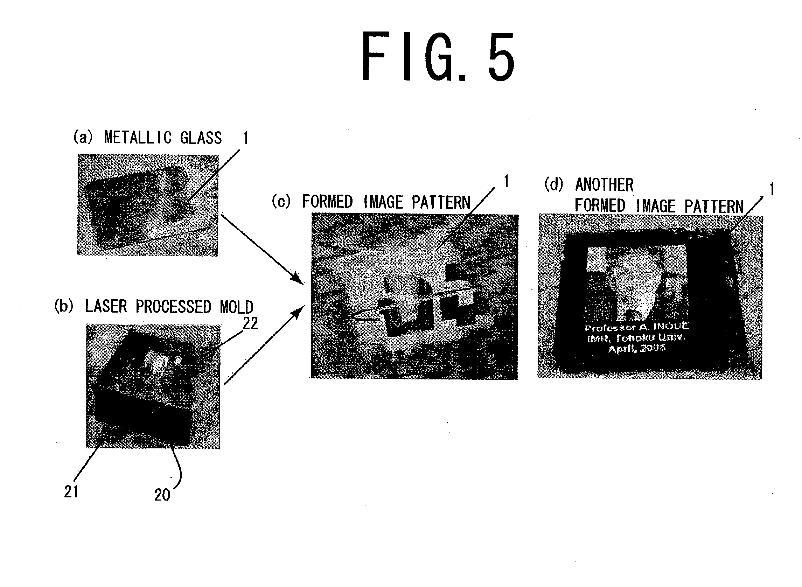

Figure 3 shows an example of the present invention. This is an example, in which a reversed image of a digital photograph is converted into a dot pattern on a cemented carbide alloy mold by means of YVO₄ laser. The pattern is drawn in the foregoing method. Further, Figure 4 is another example of the present invention, in which a letter "N" is formed also onto the cemented carbide alloy mold. (a) is an perspective view of the surface after formed, (b) is an enlarged view of (a), and (c) is also an enlarged view of a dot array observed from the top. Figure 5 shows another example of the present invention, which is a view of a case in which an image pattern made with a digital camera is laser processed onto the mold, and then reversely replicated onto the metallic glass.

According to the present invention, it becomes possible to form an image pattern especially on the surfaces of Zr based, Ti based, Ni based, Cu based and Fe based metallic glass that are required to be press-formed at not lower than 400°C, which has not hitherto been realizable, so as to significantly enhance industrial availabilities of these types of metallic glass.

## Claims

1. A method of forming an image pattern onto a surface of a metallic glass **characterized in that** the method is comprising the following steps:
(a) preparing bitmap data, which is mirror reversed with respect to a real image;
(b) forming the image pattern as an assembled pattern of dots onto a surface of a mold in accordance with the bitmap data by flashing high energy density light repeatedly and scanning the surface of the mold while forming one dot hole at each irradiation of the high energy density light; and
(c) reversely replicating the assembled pattern of dots onto the metallic glass under an oxidizing atmosphere within a supercooled liquid temperature range and at not lower than 400°C by means of the mold before crystallization of the metallic glass,
wherein the metallic glass is Zr based, Ti based, Ni based, Cu based or Fe based metallic glass having a supercooled liquid temperature range of not lower than 400°C.

2. The method according to claim 1, wherein a processed area of the surface of the mold is divided into rectangular domains each having one side length of not smaller than 10 µm and not larger than 500 µm;
the assembled pattern of dots has shades;
the shades are formed by forming the dot holes or not within each of the rectangular domains.

3. The method according to claim 1, wherein the surface of the mold is divided into rectangular domains each having one side length of not smaller than 10 µm and not larger than 500 µm;
each of the rectangular domains is divided into M by N units (3≤M,N≤10; M and N are integers) of regions for setting a resolution;
the assembled pattern of dots has shades;
the shades are formed by forming the dot holes or not within each of the regions.

4. The method according to any one of claims 1 to 3, wherein power of the high energy density light is controlled so as to make a depth of the dot hole not smaller than 0.1 µm and not larger than 10 µm.

5. The method according to any one of claims 1 to 4, wherein the mold is made of a cemented carbide alloy.

6. The method according to any one of claims 1 to 5, wherein the high energy density light is laser light.

## Patentansprüche

1. Verfahren zum Bilden eines Bildmusters auf einer Oberfläche eines metallischen Glases, **dadurch gekennzeichnet, dass** das Verfahren die folgenden Schritte aufweist:
(a) Bereitstellen von Bitmap-Daten, die spiegelbildlich in Bezug auf ein reales Bild sind;
(b) Bilden des Bildmusters als Muster, das, in Übereinstimmung mit den Bitmap-Daten, aus Dots auf einer Oberfläche einer Form zusammengesetzt ist, und zwar durch wiederholte Bestrahlung mit Licht mit hoher Energiedichte und Abscannen der Oberfläche der Form, wobei bei jeder Bestrahlung mit dem Licht mit hoher Energiedichte ein Dotloch geformt wird; und
(c) invertiertes Replizieren des zusammengesetzten Musters aus Dots auf dem metallischen Glass in einer oxidierenden Atmosphäre in einem unterkühlten flüssigen Temperaturbereich und nicht niedriger als 400°C mittels der Form vor der Kristallisation des metallischen Glases;
wobei das metallische Glas ein Zr-basiertes, Ti-basiertes, Ni-basiertes, Cubasiertes oder Fe-basiertes metallisches Glas mit einem unterkühlten flüssigen Temperaturbereich von nicht weniger als 400°C ist.

2. Verfahren gemäß Anspruch 1, wobei ein verarbeitete Fläche auf der Oberfläche der Form in rechteckige Gebiete unterteilt ist, die jeweils eine Seitenlänge von nicht weniger als 10 µm und nicht mehr als 500 µm aufweisen;
das zusammengesetzte Muster aus Dots Schattierungen aufweist; und die Schattierungen geformt werden, indem die Dotlöcher innerhalb der rechteckigen Gebiete geformt oder nicht geformt werden.

3. Verfahren gemäß Anspruch 1, wobei die Oberfläche der Form in rechteckige Gebiete unterteilt ist, die jeweils eine Seitenlänge von nicht weniger als 10 µm und nicht mehr als 500 µm aufweisen;
jedes der rechteckigen Gebiete unterteilt ist in M mal N (wobei 3 ≤ M, N ≤ 10; M und N sind jeweils Integer) Bereiche zum Einstellen einer Auflösung;
das zusammengesetzte Muster aus Dots Schattierungen aufweist; und
die Schattierungen geformt werden, indem die Dotlöcher innerhalb der rechteckigen Gebiete geformt oder nicht geformt werden.

4. Verfahren gemäß einem der Ansprüche 1 bis 3, wobei die Leistung des Lichts mit hoher Energiedichte derart kontrolliert wird, dass eine Tiefe des Dotlochs nicht kleiner als 0,1 µm und nicht größer als 10 µm ist.

5. Verfahren gemäß einem der Ansprüche 1 bis 4, wobei die Form aus einer gekitteten bzw. zementierten Karbidlegierung gefertigt ist.

6. Verfahren gemäß einem der Ansprüche 1 bis 5, wobei das Licht mit hoher Energiedichte Laserlicht ist.

## Revendications

1. Procédé de formation d'un motif d'image sur une surface d'un verre métallique, **caractérisé en ce que** le procédé comprend les étapes suivantes :
(a) préparer des données bitmap, qui sont inversées en miroir par rapport à une image réelle ;
(b) former le motif d'image en tant que motif assemblé de points sur une surface d'un moule selon les données bitmap en projetant une lumière à haute densité d'énergie de façon répétée et en balayant la surface du moule tout en formant un trou de point à chaque émission de la lumière à haute densité d'énergie ; et
(c) reproduire de manière inversée le motif assemblé de points sur le verre métallique sous une atmosphère oxydante dans une plage de température de liquide en surfusion et sans descendre en dessous de 400 °C au moyen du moule, avant la cristallisation du verre métallique,
dans lequel le verre métallique est un verre métallique à base de Zr, à base de Ti, à base de Ni, à base de Cu ou à base de Fe ayant une plage de température de liquide en surfusion qui n'est pas inférieure à 400 °C.

2. Procédé selon la revendication 1, dans lequel une zone traitée de la surface du moule est divisée en domaines rectangulaires ayant chacun une longueur latérale qui n'est pas inférieure à 10 µm et ne dépasse pas 500 µm ;
le motif assemblé de points possède des nuances ;
les nuances sont formées en formant les trous de point ou non à l'intérieur de chacun des domaines rectangulaires.

3. Procédé selon la revendication 1, dans lequel la surface du moule est divisée en domaines rectangulaires ayant chacun une longueur latérale qui n'est pas inférieure à 10 µm et ne dépasse pas 500 µm ;
chacun des domaines rectangulaires est divisé en M par N unités (3 ≤ M, N ≤ 10, M et N sont des nombres entiers) de régions pour définir une résolution ;
le motif assemblé de points possède des nuances ;
les nuances sont formées en formant les trous de point ou non dans chacune des régions.

4. Procédé selon l'une quelconque des revendications 1 à 3, dans lequel la puissance de la lumière à haute densité d'énergie est commandée de manière à ce qu'une profondeur du trou de point ne soit pas inférieure à 0,1 µm et ne dépasse pas 10 µm.

5. Procédé selon l'une quelconque des revendications 1 à 4, dans lequel le moule est fait d'un alliage de carbure cémenté.

6. Procédé selon l'une quelconque des revendications 1 à 5, dans lequel la lumière à haute densité d'énergie est une lumière laser.
